# EUROPEAN PATENT APPLICATION

(11) **EP 2 386 944 A1**
(43) Date of publication of application: **16.11.2011**
(21) Application number: 10004988.1
(22) Date of filing: 11.05.2010
(51) Int. Cl.: G06F 9/44

(54) **Method and computer software for combined in-order and out-of-order execution of tasks on multi-core computers**

(71) Applicant: SIEMENS AKTIENGESELLSCHAFT, 80333 München (DE)
(72) Inventor: Schüle, Tobias, Dr., 80636 München (DE)

(57) **Abstract**

In accordance with the present invention a method and computer program for data processing, and more particularly for in-order and out-of-order execution of dataflow graphs that contain conditionals is proposed. The method of the present invention comprises at least the steps of assigning each data a token of a plurality of tokens, tracking by a plurality of functions and operations to be processed on said data a most recently processed token, reconstructing by a one of said function and operation an original order of said plurality of data tokens, based a plurality of indices, although a portion of said plurality of data tokens is missing due to data being sent to a branch of a conditional, wherein said plurality of tokens comprises a token value and a plurality of indices, and executing said tasks based on the order of the data tokens.

## Description

### FIELD OF INVENTION

The present invention is directed to a method and computer program for data processing, and more particularly, is directed to a novel method and computer program for in-order and out-of-order execution of dataflow graphs that may contain conditionals.

### BACKGROUND OF THE INVENTION

Today's data processing capabilities evolve towards utilizing the power of multi-core and future many-core processors. In such processors, computations have to be split into tasks that can be executed in parallel. Many of today's applications, such as processing continuous streams of data in digital signal processing, require that a computation is split into a series of tasks such that each task processes an element from the stream. Said element is a data element and is been commonly nominated as token or data token.

Therefore computations on streams are performed in the pipeline fashion where the tasks or the various pipeline stages operate in parallel.

A pipeline consists of a set of ordered stages, where each stage accepts input data from its predecessor, transforms that data, then transfers it to the next stage. Normally this transfer uses some form of buffer placed between the stages. A key characteristic of a pipeline is that the computations of the stages are independent of each other. The parallelism in the pipeline results from the ability to be working on different parts of the pipeline simultaneously. Each stage can be assigned to a separate processor or processor core. This allows a stream of incoming items to be processed effectively. In such a system to achieve maximum performance the idle times of the processor cores each working on different parts of the pipeline should be avoided.

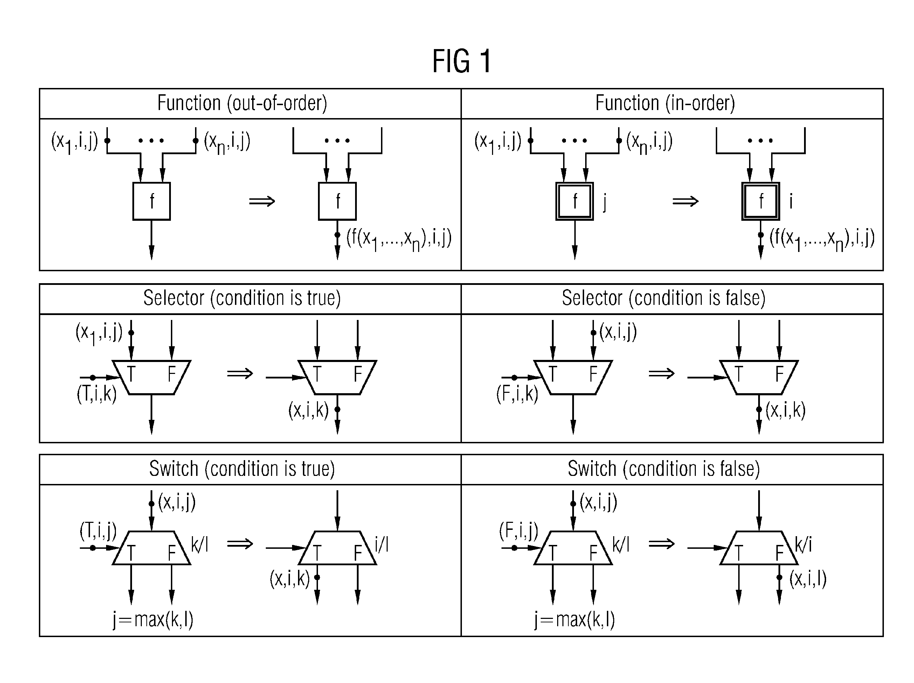

Pipelining exploits parallelism by increasing the throughput but does not decrease the latency, the time required to process a token. The latency is particularly important in embedded systems that are usually subject to real-time constraints. A reduction of the latency would be achieved if more complicated structures than pipelines are employed. Such structures can be represented by dataflow graphs. Dataflow graphs, in contrast to pipelines, which have a string-like linear structure, present the advantage that their nodes may be connected in an arbitrary nonlinear way. Figure 1 is a representation of transition rules for basic operations in dataflow graphs. Figure 1, which will be described in detail further in the present document, provides a representation of basic elements employed to construct the dataflow graphs, constituting the generalization from pipelines to dataflow graphs.

In order to avoid idle times of the processor cores, it has been proposed that the order in which the tokens enter the pipeline should not be necessarily preserved. However, certain tasks require that the tokens arrive in the original order. Typical examples are particular processing applications that compute differences between consecutive video frames. Moreover, tasks to perform input output operations like writing to a file on the hard disk or controlling an actuator, must be processed in order. Otherwise, the results might be wrong.

Therefore, currently a need exists for a solution that allows to achieve maximum performance and increased throughput, while latency is decreased in parallel computing systems.

### SUMMARY OF THE INVENTION

The present invention proposes a solution to the above need by proposing a novel method of combined in-order and out-of-order execution of tasks on multi-core computers and a computer software adapted to implement certain novel method.

In accordance with one aspect of the present invention is proposed a method of combined in-order and out-of-order execution of tasks on multi-core computers comprising at least the steps of assigning each data a token of a plurality of tokens, tracking by a plurality of functions and operations to be processed on said data a most recently processed token, reconstructing by a one of said function and operation an original order of said plurality of data tokens, based a plurality of indices, although a portion of said plurality of data tokens is missing due to data being sent to a branch of a conditional, wherein said plurality of tokens comprises a token value and a plurality of indices, and executing said tasks based on the order of the data tokens.

In the method of combined in-order and out-of-order execution of tasks on multi-core computers the plurality of indices comprises at least a token position indicia, at least a position of a predecessor token in the data stream, and at least a combination of token position indicia and a position of a predecessor token in the data stream.

The method of combined in-order and out-of-order execution of tasks on multi-core computers further comprises applying a set of transition rules for basic operations. In the method of combined in-order and out-of-order execution of tasks on multi-core computers of the present invention, the plurality of functions and operations to be processed comprises an in-order function, an out-of-order function, a selector, a switch operation, and a combination thereof. The method further comprises transforming the plurality of data token indices in a distributed manner.

In accordance with a further aspect of the present invention is proposed a computer-readable medium having recorded thereon a software program to be executed on a computer, the computer readable medium being able to prompt a server in the computer network to perform combined in-order and out-of-order execution of tasks on multi-core computers, the software program implementing the program steps of assigning each data a token of a plurality of tokens, tracking by a plurality of functions and operations to be processed on said data a most recently processed token, and reconstructing by a one of said function and operation an original order of said plurality of data tokens, based a plurality of indices, although a portion of said plurality of data tokens is missing due to data being sent to a branch of a conditional, wherein said plurality of tokens comprises a token value and a plurality of indices, and executing said tasks based on the order of the data tokens.

These and other objects, features, and advantages of the invention will be apparent through the detailed description of the preferred embodiments and the drawings attached hereto. It is also to be understood that both the foregoing summary and the following detailed description are exemplary and not restrictive of the scope of the invention.

### BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.

FIG. 1 illustrates transition rules for basic operations in data flow graphs.

FIG. 2 illustrates in-order execution of a dataflow graph containing a conditional, performed in accordance with conventional in-order execution of data flow graphs;

FIG. 3 illustrates a schedule on a dual-core processor for the trace shown in FIG. 2;

FIG. 4 illustrates combined in-order and out-of-order execution of a dataflow graph containing a conditional, in accordance with the present invention;

FIG. 5 illustrates a schedule on a dual-core processor for the trace shown in FIG. 4; And

FIG. 6 illustrates a flow chart comprising a high-level representation of the method in accordance with the present invention.

### DETAILED DESCRIPTION OF THE PRESENT INVENTION

For the purposes of the present document, by token is meant a triple <x, i, j>, wherein x is a token value, and i and j are denominated with index or indicia. Further, in the present document by index or indicia is understood a unique identifier (usually in the form of an integer) that is generated and sent to identify the current session.

As discussed above, pipelining exploits parallelism by increasing the throughput, but it does not lead to decreasing the time required to process a data token. The latency of the system is particularly important in embedded systems that are usually subject to real time constrains. A reduction of the latency can be achieved if more complicated structures than pipelines are employed, such as dataflow graphs.

For the purposes of the present document by "dataflow graph" is defined a bipartite directed graph in which the two types of nodes are called links and actors. Actors can be considered similar to transitions in Petri nets, and links similar to places. Actors describe operations while links receive data from a single actor and transmit values to one or more actors by way of arcs. Arcs can be considered as channels of communication. In its basic form, nodes (actors and links) are enabled for execution when all input arcs contain tokens. In the case of the present invention an arc may contain multiple tokens and an actor can execute even if an output arc is not empty. An enabled node consumes tokens on input arcs and produces tokens on output arcs. Arcs can be control or data arcs. In the case of control arcs (which enter or leave control links), the token values are of the type Boolean (true or false). Control tokens are introduced to perform conditional execution; the behaviour of certain actors (selectors and switches) depends on the control value appearing on the input control arc. For data arcs (which enter or leave data links), a token value may be a single value such as an integer, a real, a character, etc., a compound data structure such as a matrix, a vector, a video frame, a finite sequence of audio signals, a network packet, etc., or a pointer or a reference to such a data structure. Using larger data structures or pointers or references to such data structures instead of single values reduces the overhead and is usually more efficient. However the present invention does not make any assumptions about the type and the size of token values, and it may be applied to various types of values.

The data flow model of computation is neither based on memory structures that require inherent state transitions nor does it depend on history sensitivity. Thus, it eliminates some of the inherent von Neumann pitfalls. Several extensions to basic data flow have been proposed so that data flow techniques can be used in a variety of applications.

FIG. 1 illustrates transition rules specific for the present invention and not currently comprised in the state of the art for basic operations in data flow graphs. Illustrated in Fig. 1 is the dataflow graph behaviour of a function, whether is performed in an out-of-order or in an in-order fashion, the dataflow graph behaviour of a selector, and the dataflow graph behaviour of a switch. In contrast to functions, there is no need to distinguish between in-order and out-of-order execution of selectors and switches. The former are always executed out-of-order and the latter are always executed in-order.

As it may be observed, dataflow graphs, in contrast to pipelines, which have a string like linear structure, allow the nodes to be connected in an arbitrary nonlinear way. Therefore, dataflow graphs can be viewed as a generalization of pipelines.

Advantageously, the flow of tokens in dataflow graphs may be controlled dynamically depending on the input data. For example, in a conditional a stream is split into substreams using a switch and the substreams are merged at the end using a selector. Since the branches of a conditional need not to have the same length, the time at which the tokens arrive at the end may vary significantly. Out-of-order execution helps to reduce idle times that may occur when a task has to wait for a token of another branch.

The use of dataflow graphs with tokens facilitates a solution to the problem of combining in-order and out-of-order execution of computations in dataflow graphs that contain conditionals. The out-of-order execution of tasks leads to improved performance and to reduced energy consumption as it will be described in the following. Should a task need to be executed in-order, the tokens are automatically reordered. Therefore, a combined in-order and out-of-order execution of tasks on multi-core computers leads to at least improved performance and reduced energy consumption while maintaining the correctness of the computation results.

The use of pipelining for parallel computing was presented in "Patterns for parallel programming" by T.G. Mattson, B.A. Sanders and B.L. Massingill. A method that permits out-of-order execution of tasks in pipelines was presented in "Rethinking the pipeline as object-oriented states with transformation" by S. MacDonald, D. Szafron, and J.Schaeffer. According to said method, to ensure that all tokens are processed in the correct order, each token carries an associated sequence number that specifies its position in the stream. If a task must be executed in-order, the tokens are reordered according to their sequence numbers. As in other solutions known in the art, the programmer explicitly specifies whether a pipeline stage must be executed in-order or out-of-order. However said method only supports linear pipelines. This means that nonlinear structures must be linearized, which increases the latency and complicates the implementation.

Other solutions published in the art present methods for the construction of dataflow graphs from a high-level description. However, set publications can not describe how to execute the resulting dataflow graphs on multi-core processors, nor do they address the problem of combining in-order and out-of-order execution. It was proposed that out-of-order execution is restricted to branches of the dataflow graphs, therefore the tokens must be reordered at the end of the conditional, and this limits the amount of available parallelism. This is a severe restriction since conditionals contribute to a large part to the out-of-order execution.

In the dataflow model of computation out-of-order execution can be achieved using the tagged token scheme. According to this scheme to each token a tag is attached, which specifies the context. The tags are used to ensure that only tokens of the same context are processed by an operation. However, the tagged token scheme does not provide any means to execute certain operations in-order since they are assumed to be side-effect free.

Out-of-order execution is frequently used in modern microprocessors to increase instruction throughput. However, the out-of-order execution in microprocessors is different from the out-of-order execution of tasks on multi-core computers. In microprocessors out-of-order execution means that a sequence of instructions is reordered according to their data dependencies. This way, unnecessary dependencies due to the sequential nature of the von Neumann architecture are resolved. Since dataflow graphs do not have an implicit sequential ordering, there is no need to resolve such dependencies. As previously mentioned in the context of the present document, out-of-order execution refers to the order in which the data items of a stream are processed. Further, the present document mainly refers to tasks that are more complex than machine instructions in microprocessors.

As discussed above, for the purposes of the present document, by an index or indicia of a token or data token is understood a unique identifier (usually in the form of an integer) that is generated and sent to identify the current session. As known in the art a token carries only one index. In accordance with the present invention, each token is proposed to carry besides its value, two indices, one that specifies the position of the token and one that specifies the position of its predecessor in the stream.

Referring again to the illustration of FIG. 1, that shows the transition rules for basic operations in dataflow graphs, a token following the format of <x, i, j> is used as input for a function, selector or switch, irrespective if they are performed out-of-order or in-order. For example, <x₁, i, j> and <xₙ, i, j> are tokens used as input for a function, both when executed in-order and out-of-order. With x is denoted the value of the token, with i is denoted the current index and with j is denoted the index of the previous token. An out-of-order function is only executed if the incoming tokens have the same indices i and j. In FIG. 1 this is illustrated by the fact that the tokens pertaining to each input of an out-of-order function all have the same indices i and j. It may be further observed that in-order functions store the index of the previously processed token to ensure that subsequent tokens are processed in the correct order. An in-order function is only executed if the incoming tokens have the same indices i and j and if j equals the stored index of the previously processed token. After execution of an in-order function, the index of the previously processed token is set to i. Similarly, the switch operation stores the indices of the tokens that were last sent to the true (T) or false (F) branch. In FIG. 1, the stored indices are denoted with k (true branch) and 1 (false branch). A switch operation is only executed if the incoming tokens have the same indices i and j and if j equals the maximum of the stored indices k and 1. After execution of a switch operation, the index of the token last sent to the true (T) or false (F) branch is set to i. Finally, a selector is only executed if the incoming tokens have the same index i and there is a token at the data input corresponding to the Boolean value of the token at the control input. The indices of the previous tokens need not match since the tokens belong to different streams. Since functions that must be processed in-order as well as switch operations, which are used to implement conditionals, keep track of the most recently processed token, they can reconstruct the original order of the tokens even if some tokens are missing because they have been sent to the other branch of a conditional.

It may be assumed, for exemplary purposes, that the token most recently processed by an in-order function has index i=3. If a token with index i=5 arrives, it might be the case that the stream is unordered and a token with index i=4 will arrive at a later time. However, if the index j of the token is 3, it may be safely assumed that there will not be a token with index i=4 and the in-order function can safely proceed to process the token with index i=5. Otherwise, the system would have to wait to process the token with index i=5 till a token with index i=4 is received. In contrast, out-of-order functions can immediately process a token independent of the predecessor's index, reducing therefore the latency of the processing system.

Therefore, to summarize, the present invention proposes a method of combined in-order and out-of-order execution of tasks on multi-core computers comprising the steps of assigning each data a token of a plurality of tokens, tracking by a plurality of functions and operations to be processed on said data a most recently processed token, and reconstructing by a one of said function and operation an original order of said plurality of data tokens, based a plurality of indices, although a portion of said plurality of data tokens is missing due to data being sent to a branch of a conditional, the plurality of tokens comprising a token value and a plurality of indices, and executing the tasks based on the order of the data tokens. The plurality of indices are the current index and the index of the previous token.

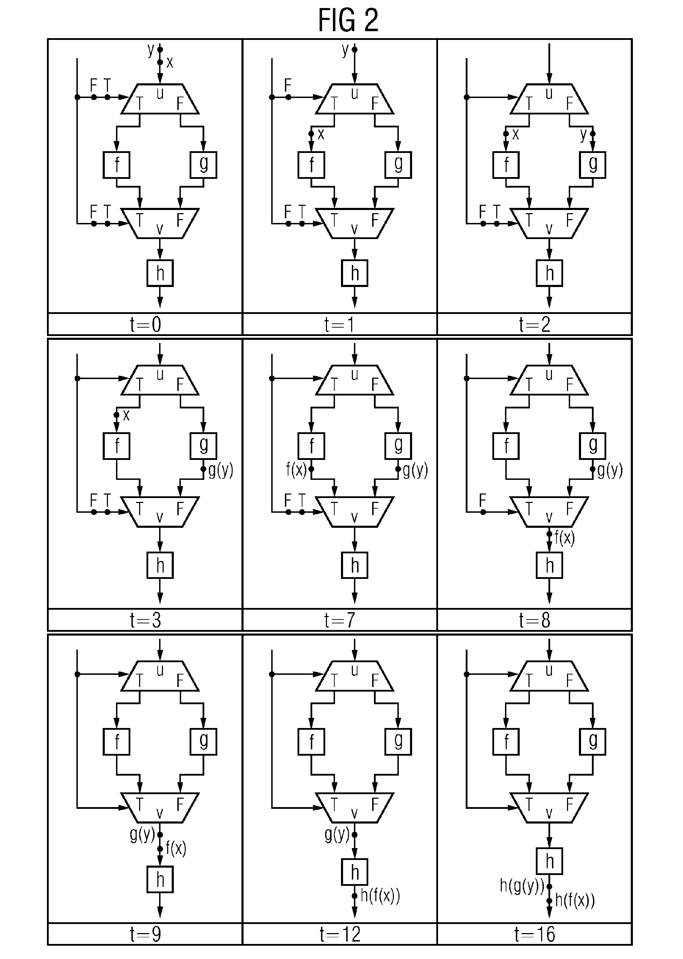

Referring now to the illustration of FIG. 2, FIG. 2 is a representation of an in-order execution of a dataflow graph containing a conditional, performed in accordance with conventional in-order execution of data flow graphs.

As it may be observed in Fig. 2, the data tokens comprise only the token value. The dataflow graph of Fig. 2 comprises three functions, f, g, and h, a switch u and a selector v. Data denoted with tokens x and y is processed in the dataflow graph. As it may be observed in the subsequent processing steps of Fig. 2, functions f, g, and h require 6, 1, and 4 time units to execute, respectively, and the total execution time is 16 time units.
Initially, there are data tokens x and y at the data input of the switch, and control tokens carrying the Boolean values true (T) and false (F) at the control inputs of the switch and the selector. As the first step, the token x is transferred to the true-branch of the conditional, the left branch in the example, according to the value true (T) at the control input. At time t=1, the token y is transferred to the false-branch of the conditional, the right branch in the example. At time t=2, the functions f and g start to execute. Since function g only requires one unit of time to complete, the result g(y) is available at time t=3. However, the resulting token can not yet be transferred to the output of the selector, since function f is still executing and all operations must be performed in-order. Therefore, the token has to wait until the result f(x) is computed and subsequently processed by the selector, which is the case at time t=8. At this point of time, the selector processes g(y). Finally, at times t=9 and t=12 function h is executed to produce h(f(x)) and h(g(y)), which are available at time t=16. To sum up, idle times arise due to the fact that function g is faster than function f, but the result g(y) can not be processed before f(x) has been processed. In other words, a token can not pass another token, since this would destroy the order of the tokens.

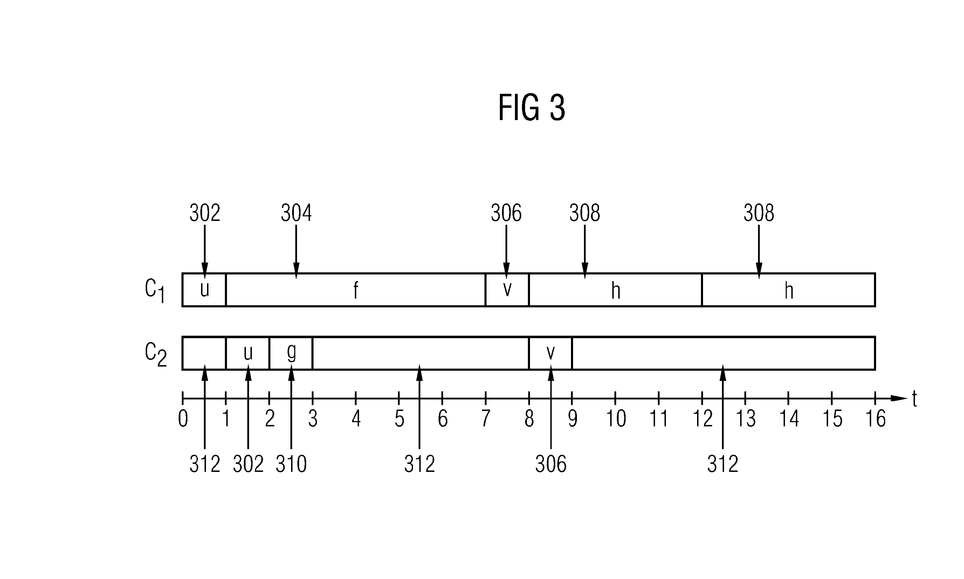

Referring now to the illustration of FIG. 3, FIG. 3 is a representation of a schedule on a dual-core processor for the trace shown in FIG. 2;

As it may be observed in Fig. 3, the times affected to the completion of function f is indicated with period 304, and as discussed above, requires 6 time units to execute, the times affected to the completion of function g is indicated with 310 and requires 1 unit to execute and the times required for function h to execute is denoted with 308 and requires 4 units to execute. The periods of time denoted with 302 and 306 are dedicated to executing the switch and the selector, respectively. The remaining time periods indicated with 312 represent idle times. A total of 16 time units are necessary for the completion of data processing while following the in-order execution of the dataflow graph containing a conditional.

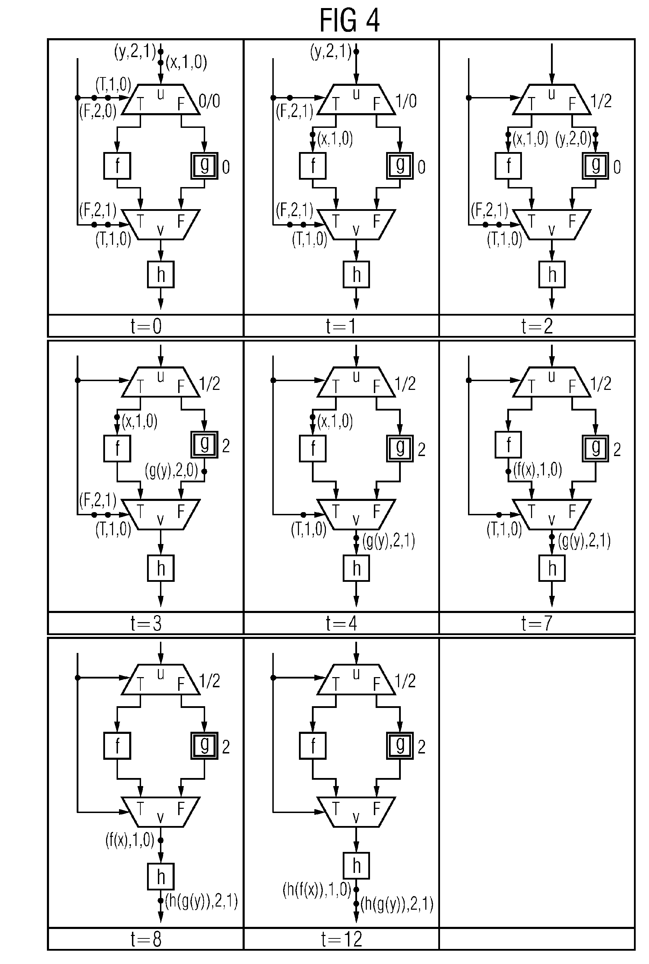

Should the same dataflow graph be considered to be executed in accordance with the method proposed by the present invention, we refer now to the illustration of FIG. 4.
FIG. 4 is a representation that illustrates combined in-order and out-of-order execution of a dataflow graph containing a conditional, in accordance with the present invention.

As it may be observed in Fig. 4, the data tokens comprise the token value, the current index and the index of the previous token. The dataflow graph of Fig. 4 comprises three functions, f, g, and h, a switch u and a selector v. Data denoted with tokens <x, i, j> and <y, i, j> is processed in the dataflow graph. Exemplarily the data is denoted with token <x,1,0> and <y,2,1>. As it may be observed in the subsequent processing steps of Fig. 4, the total execution time is 12 time units.
Initially, there are data tokens <x,1,0> and <y,2,1> at the data input of the switch, and the control tokens <T,1,0> and <F,2,1> at the control inputs of the switch and the selector. As the first step, the token <x,1,0> is transferred to the true-branch of the conditional and the index of the token previously sent to the true branch is updated accordingly, is set to 1. At time t=1, the token <y,2,1> is transferred to the false-branch of the conditional and the index of the token previously sent to the false branch is updated accordingly, is set to 2. At time t=2, the functions f and g start to execute. Since function g only requires one unit to complete, the result <g(y),2,0> is available at time t=3. In contrast with Fig. 2, the token can be immediately processed out-of-order by the selector and need not wait until function f is completed. Hence, at time t=4 function h starts to process the token <g(y),2,1>, and at time t=8 it starts to process the token <f(x),1,0>. Execution ends at time 12 when both executions of h are completed. This example demonstrates that idle times can be reduced, and thus energy can be saved, using the presented method for combined in-order and out-of-order execution.

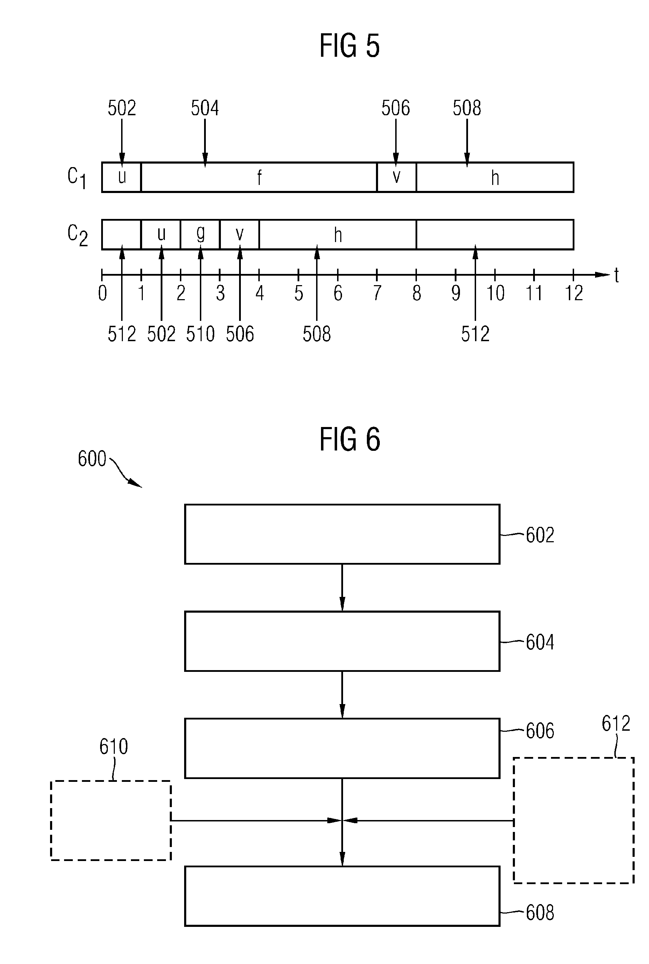

Referring now to the illustration of FIG. 5, FIG. 5 is a representation of a schedule on a dual-core processor for the trace shown in FIG. 4;

As it may be observed in Fig. 5, the times affected to the completion of function f is indicated with period 504, and as discussed above, requires 6 time units to execute, the times affected to the completion of function g is indicated with 510 and requires 1 unit to execute and the times required for function h to execute is denoted with 508 and requires 4 units to execute. The periods of time denoted with 502 and 506 are dedicated to executing the switch and the selector, respectively. The time periods indicated with 512 represent idle times. A total of 12 time units are necessary for the completion of data processing while following the combined in-order and out-of-order execution of the dataflow graph containing a conditional.

As it may be observed from the above examples, under the assumption that the power consumption is constant, the amount of energy consumed for the data processing in accordance with the present invention is reduced by 25 %, from a total of 32 units to a total of 24 time units during which the processor needs to be powered.

In accordance with the present invention, some tasks may be executed in-order and some tasks may be executed out-of-order. The in-order execution of tasks is particularly important in embedded systems that continuously interact with their environment. Using the approach presented by the present invention, the externally visible behaviour of the system is preserved, even though some tasks are executed out-of-order on a multi-core processor. As previously mentioned, this leads to the reduction of idle times, which leads to the increased performance and energy reduction of the processing activities. The latter follows from the fact that most frameworks for parallel programming avoid time consuming context switches by the operating system in case that the operating core is idle. As a result, idle cores are busy waiting and can not be used for other processes, or put into power saving mode.

A further advantage offered by the solution of the present invention is that the presented method deals directly with conditionals and does not require linearization of non linear structures. Moreover, no global data structures need to be maintained that result in a bottleneck and limit system scalability. The transformation of token indices is accomplished in a completely distributed manner and causes little system overhead, since only two integers are required to represent the indices. The method of the present invention is able to exploit out-of-order execution beyond the end of a conditional. This way idle frames that arise due to differences in run time in the two branches of a conditional are compensated.

Therefore to summarize and referring now to the illustration of FIG. 6, FIG. 6 is a representation of a flow chart comprising a high-level representation of the method in accordance with the present invention.

Method 600 proposed in accordance with one aspect of the present invention, a method 600 of combined in-order and out-of-order execution of tasks on multi-core computers comprises at least the steps of assigning 602 each data a token of a plurality of tokens, tracking 604 by a plurality of functions and operations to be processed on said data a most recently processed token, reconstructing 606 by a one of said function and operation an original order of said plurality of data tokens, based a plurality of indices, although a portion of said plurality of data tokens is missing due to data being sent to a branch of a conditional, wherein said plurality of tokens comprises a token value and a plurality of indices, and executing 608 said tasks based on the order of the data tokens.

In the method 600 of combined in-order and out-of-order execution of tasks on multi-core computers the plurality of indices comprises at least a token position indicia, at least a position of a predecessor token in the data stream, and at least a combination of token position indicia and a position of a predecessor token in the data stream. The plurality of indices may be two integers.

The method 600 of combined in-order and out-of-order execution of tasks on multi-core computers optionally further comprises the step of applying 610 a set of transition rules for basic operations.

In the method 600 of combined in-order and out-of-order execution of tasks on multi-core computers of the present invention, the plurality of functions and operations to be processed comprises an in-order function, an out-of-order function, switches and selectors, and a combination thereof. The method 600 further comprises optionally transforming 612 the plurality of data token indices in a distributed manner.

In accordance with a further aspect of the present invention is also proposed a computer-readable medium having recorded thereon a software program to be executed on a computer, the computer readable medium being able to prompt a server in the computer network to perform combined in-order and out-of-order execution of tasks on multi-core computers, the software program implementing the program steps of assigning each data a token of a plurality of tokens, tracking by a plurality of functions and operations to be processed on said data a most recently processed token, and reconstructing by a one of said function and operation an original order of said plurality of data tokens, based a plurality of indices, although a portion of said plurality of data tokens is missing due to data being sent to a branch of a conditional, wherein said plurality of tokens comprises a token value and a plurality of indices, and executing said tasks based on the order of the data tokens.

Those having skill in the art will appreciate that the invention described herein may work with various configurations. Accordingly, more or less of the aforementioned system components may be used and/or combined in various embodiments. Additionally, more or less of the aforementioned operations may be performed and/or various operation may be performed in varying order. It should also be understood that the various software modules discussed herein and unit testing application that are utilized to accomplish the functionalities described herein may be maintained and or executed on one or more special purpose or general purpose computers and/or processors cable of responding to and executing instructions in a defined manner as necessary. In some embodiments, as would be appreciated, the functionalities described herein may be implemented in various combinations of hardware and/or firmware, in addition to, or instead of, software.

While the invention has been described with reference to the certain illustrated embodiments, the words that have been used herein are words of description, rather than words of limitation. Changes may be made, within the purview of the associated claims, without departing from the scope and spirit of the invention in its aspects. Although the invention has been described herein with reference to particular structures, acts, and materials, the invention is not to be limited to the particulars disclosed, but rather can be embodied in a wide variety of forms, some of which may be quite different from those of the disclosed embodiments, and extends to all equivalent structures, acts, and, materials, such as are within the scope of the associated claims.

## Claims

1. Method of combined in-order and out-of-order execution of tasks on multi-core computers comprising the steps of:
assigning each data a token of a plurality of tokens;
tracking by a plurality of functions and operations to be processed on said data a most recently processed token,
reconstructing by a one of said function and operation an original order of said plurality of data tokens, based on a plurality of indices, although a portion of said plurality of data tokens is missing due to data being sent to a branch of a conditional, wherein said plurality of tokens comprises a token value and a plurality of indices, and executing said tasks based on the order of the data tokens.

2. The method of claim 1, wherein said plurality of indices comprises at least a token position indicia.

3. The method of claim 1, wherein said plurality of indices comprises at least a position of a predecessor token in the data stream.

4. The method of claim 1, wherein said plurality of indices comprises at least a combination of token position indicia and a position of a predecessor token in the data stream.

5. The method of claims 1 and 4, wherein said plurality of indices are two integers.

6. The method of claim 1, further comprising applying a set of transition rules for basic operations.

7. The method of claims 1 to 6, wherein said plurality of functions and operations to be processed comprises an in-order function, an out-of-order function, a selector, a switch operation, and a combination thereof.

8. The method of claims 1 to 7, further comprising transforming said plurality of data token indices in a distributed manner.

9. A computer-readable medium having recorded thereon a software program to be executed on a computer, the computer readable medium being able to prompt a server in the computer network to perform combined in-order and out-of-order execution of tasks on multi-core computers, the software program implementing the program steps of:
assigning each data a token of a plurality of tokens;
tracking by a plurality of functions and operations to be processed on said data a most recently processed token, and
reconstructing by a one of said function and operation an original order of said plurality of data tokens, based a plurality of indices, although a portion of said plurality of data tokens is missing due to data being sent to a branch of a conditional, wherein said plurality of tokens comprises a token value and a plurality of indices, and executing said tasks based on the order of the data tokens.
